# EUROPEAN PATENT APPLICATION

(11) **EP 4 576 348 A1**
(43) Date of publication of application: **25.06.2025**
(21) Application number: 23218135.4
(22) Date of filing: 19.12.2023
(51) Int. Cl.: H01M 50/148, H01M 50/159, H01M 50/545

(54) **BATTERY CELL AND METHOD FOR MANUFACTURING A BATTERY CELL**

(71) Applicant: CUSTOMCELLS Holding GmbH, 25524 Itzehoe (DE)
(72) Inventor: de Righetti, Philip, 25524 Itzehoe (DE)
(74) Representative: LKGLOBAL Lorenz & Kopf Patentanwalt Attorney at Law PartG mbB

(57) **Abstract**

A first aspect of the present disclosure is related to a battery cell (100), comprising:
- an electrode stack (110) with two electrode layers, an anode layer and a cathode layer, wherein each electrode layer comprises a current collector (112) ;
- a can (102) with a bottom (104) and a top (106) that comprises the electrode stack (110);
- a lid (120) arranged on the top (106) of the can (102);
- a lid (120) arranged on the bottom (104) of the can (102);
wherein at least one lid (120) comprises one or more elevations (122) oriented towards the electrode stack (110) through which it is directly connected to one or both current collectors (112) of the electrode stack (110).

## Description

### Technical Field

This disclosure is related to battery cells and methods for manufacturing battery cells.

### Background

In cylindrical battery cells, like lithium-ion or alkaline batteries, the electrode stack inside the cell casing comprises layers of anode and cathode materials wound-up in a spiral or jelly-roll configuration, separated by a porous separator and soaked in an electrolyte solution. This electrode stack or jelly-roll, or in particular electrode roll needs to be connected to the battery cell contacts. Terminal tabs extend from the electrode assembly and serve as connection means to a contact means that is further connected to the cell contact. The battery cell has two such connection means-one for the cathode and one for the anode. These contacts are typically metal caps or pins. The terminal tabs of the electrode assembly are connected to the connection means through methods such as welding or crimping, ensuring a secure electrical connection.

To achieve battery cells with higher energy density, more electrode material is pressed into the casing. This however leads to less space for the electrolyte to travel and thus a worse wetting of the electrodes with the electrolyte.

Further improvements, such as weight reduction, reduction of complexity and in particular retaining of available space inside the casing are desired.

### Summary

An object of the present disclosure is to improve a battery cell.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell, comprising:
- an electrode stack with two electrode layers, an anode layer and a cathode layer, wherein each electrode layer comprises a current collector;
- a can with a bottom and a top that comprises the electrode stack;
- a lid arranged on the top of the can;
- a lid arranged on the bottom of the can;
wherein at least one lid comprises one or more elevations oriented towards the electrode stack through which it is directly connected to one or both current collectors of the electrode stack.

A battery cell can comprise a cylindrically formed electrode stack. Additionally or alternatively, a wound-up electrode stack can have a form different from an ideal cylinder, e.g. oval, elliptic, or even rectangular, wherein in the latter the curved surface comprises a rather flat surface part and a sharply curved surface part at the edges of the electrode stack in order to achieve a wound-up electrode stack. In fact, a wound-up electrode stack can also be used for a prismatic battery architecture or a pouch-cell-based battery architecture. In particular, a wound-up electrode stack can have a form adapted to an outer casing, wherein the outer casing might be formed according to environmental requirements that are not based on the electrical battery, e.g. based on a form of a car chassis.

A top of a wound-up electrode stack refers to the two opposite ends of the electrode stack that are separated by the curved surface. The top of the wound-up electrode stack can be the end where one pole (cathode) is located. The bottom of the electrode stack can be the end where the other pole (anode) is located.

An electrode stack may consist of an anode layer and a cathode layer, separated by a separator layer. Typically, the electrode stack may be saturated with an electrolyte.

Current collectors serve as the points of electrical contact between the internal electrode stack and the external circuit of the battery. Battery cells, such as lithium-ion batteries, have two types of current collectors - one for the cathode and one for anode. The current collectors for the two different electrode types can be made of different materials. An anode current collector can be made of copper (or another conductor such as steel, gold,etc.) and is attached to the negative electrode material. It can extend from the wound-up electrode stack and is connected to the negative terminal of the battery. A cathode current collector can be made of aluminum (or another conductor such as steel, gold,etc.) and is attached to the positive electrode material. It can extend from the wound-up electrode stack and is connected to the positive terminal of the battery.

A current collector can be an uncoated area of an electrode (in particular in case of a so-called "tabless" design of an electrode). A current collector can also be referred to as "tab". A current collector can be a specially formed conductor attached to an electrode. A current collector can refer to a conductive strip and/or foil (e.g. formed of metal) that extends from the electrode stack inside a battery cell to provide an external electrical connection. One or more current collectors can be thin, in particular only a few micrometer thick. A plurality of current collectors can be formed at an edge of an electrode, e.g. as an electrode extension and/or as an uncoated part of the electrode. The current collectors then extend similar to teeth or cams on the long side of the unwound electrode layer. One or more tabs can be made of the same material as the electrode and/or of a different conductive material. After the electrode stack is wound-up one or more current collectors can extend axially to the electrode stack, in particular parallel to an axis around which the electrode stack is wound-up. The current collectors can be angled, folded, or plated such that they form an area next, in particular parallel, to a top or a bottom of a wound-up electrode stack.

A can is part of a casing comprising an electrode stack and an electrolyte. A can may be a rigid casing. A can may be the outer shell or casing of a battery cell. The can may also serve as one of the electrical contacts, i.e. the negative terminal or the positive terminal. The can may be formed round (cylindrically, elliptic, oval), prismatic, or custom-made. Cylindrical cells, like the widely-used 18650 or 21700 cells, may have a cylindrical can. The can may be made of metal, such as steel or aluminum, to provide a robust and durable enclosure and to efficiently conduct electricity.

A can may be a cylindrical tube or a hollow cylinder with an open top and an open bottom. A can may however also comprise an open top and a closed bottom. Insofar, a can may be a cylindrical tube open to one side or two both sides. A casing may comprise a can and one or two lids to close the can on the sides parallel to a top of a bottom of an electrode stack.

A lid is also part of the casing of a battery cell. A lid may be formed as a battery cap or a battery cover. A lid may also be formed as an intermediate piece, e.g. a disc, that is covered by an additional cap. A lid may be arranged on the top and/or bottom of a round cell. A lid may seal the interface between the respective lid and a can, such that no electrolyte and/or gas can exit and/or enter a battery cell.

A lid may thus comprise two sides connected by a circumferential side wall. The height of such a circumferential side wall, i.e. the thickness of the lid, may be low relative to the diameter of the lid.

An elevation comprised in a lid can refer to an elevated or raised area or protrusion designed into the lid. An elevation may be designed into one of the two sides of a lid. Insofar, the surface of such an elevation protrudes from the level of the corresponding side of said lid. An elevation can be formed as a circular convexity. An elevation can furthermore be formed of another material as its surroundings.

A lid can be connected to a current collector, e.g., by crimping, stapling, pinning, screwing, and/or welding. In particular, a lid can be connected to a current collector by ultrasonic or laser welding. By connecting a lid directly with the current collector any intermediate contact means, such as e.g. a cathode disk or anode disk, can be spared. This can provide a lighter battery cell and a battery cell with less parts, i.e. a less complex battery cell. Furthermore, more available space inside the casing can be retained.

By connecting an elevation directly to a current collector of the electrode stack, a space, e.g. one or more channels, is created between the lid and the electrode stack, thus allowing a better flow of the electrolyte. Such a channel is formed because of the distance between the surface of the elevation and the surface of the side of the lid from which it protrudes.

When the electrode stack is pressed on one or more elevations of a lid, an improved positioning and fixation of the electrode stack on the lid may be attained.

An embodiment of the first aspect is related to a battery cell,
wherein a lid and the can are one piece.

In one example, the can may be a cylindrical tube or a hollow cylinder with an open top and a closed bottom. The bottom thus forms the lid arranged at the bottom of the can. Insofar, a can may be a cylindrical tube open to one side only.

In an example where the can is a cylinder open only on the top and wherein the bottom forms the lid, a bursting membrane may be designed into the bottom. A bursting membrane can be a safety device designed to rupture or burst under pre-defined conditions of the battery cell. A bursting membrane can be configured to burst if a pre-defined pressure is reached. Additionally or alternatively, a bursting membrane can be configured to burst if a pre-defined temperature is reached. A bursting membrane can be configured as a rupture disc. This can be a thin membrane at the top or the bottom of the battery cell. It can be made of metal or other materials engineered to burst at a precise pressure. A bursting membrane can comprise stainless steel, nickel, tantalum, polymers, or composite materials. A bursting/rupture of the bursting membrane will cause the fluids to enter the battery cell housing. The bursting membrane can be arranged in the base of the housing, attached to the housing, and/or integrated into a lid.

Such an embodiment may be desirable as the complexity of the battery cell is reduced. Furthermore, the manufacturing of such an embodiment is simplified as the bottom lid is already comprised in the can and thus does not need to be welded to the can. The can and any deepenings and elevations in this lid, i.e. the bottom of the can, may be manufactured in one process step, e.g. deep drawing, impact extrusion or in particular reverse extrusion.

An embodiment of the first aspect is related to a battery cell,
wherein at least one lid comprises one or more deepenings.

A deepening comprised in a lid can refer to a recessed area or indentation designed into the lid. A deepening may be designed into one of the two sides of a lid. Insofar, the surface of such a deepening may be recessed relative to the corresponding side of said lid. Additionally, or alternatively, a deepening can be an area where a cross-section of the lid is thinner. A deepening can be formed as a circular groove or channel. A deepening can further be formed of another material as the surroundings of said deepening.

An elevation and a deepening may be arranged on top of each other. A deepening in one side of a lid may thus protrude as an elevation on the other side of the lid. Insofar, a pair of deepening and elevation may be attained by a forming process such as e.g. punching, drawing, extrusion, or deep drawing of the lid. Desirably, all elevations and all deepenings are designed as such a pair. A cross-section of the lid, in particular a cross-section between the surface of an elevation and a surface of a deepening may be thinner than the general thickness of the lid.

A pair of deepening and elevation can be used for a direct connection of the lid to one or more current collectors of the electrode stack. For example, a deepening can be used for welding, crimping and/or pinning/stapling the corresponding elevation of the lid to one or more current collectors. If the cross-section of a lid in a deepening is thinner, a welding process needs less energy to weld through the lid in order to directly connect the lid to one or more current collectors. A deepening can further function as an optical and/or mechanical guide for a welding used for directly connecting the lid to one or more current collectors.

An embodiment of the first aspect is related to a battery cell,
wherein at least one elevation is a stepped elevation with at least two levels.

A stepped elevation may comprise for example two levels or surfaces, wherein one level or surface protrudes from the other. Insofar, one surface may be further away from the side of the lid from which the elevation protrudes.

In particular, one level may be used to connect the elevation to a current collector and may thus be positioned directly below or above the current collector, wherein the other level which protrudes from the first level, may be used to guide the electrode stack. The second level would thus be positioned at for example the side of the electrode stack like e.g. a guiding rail.

An embodiment of the first aspect is related to a battery cell,
wherein one or more elevations and/or one or more deepenings have a radial dimension that is larger than their concentric dimension.

In one example, an elevation can be formed as an elongated bulge or convexity going from near the center of a lid to near the edge of the lid. In this way, a plurality of elongated bulges can be arranged on the lid, such that they extend radially and are conformally distributed on the lid. When the lid is welded to one or more current collectors through these conformally arranged elevations, a balanced connection of the lid to the electrode stack can be achieved. Furthermore, an area for connecting the lid to a current collector can be increased/maximized, while on the same time stiffness and structural integrity of the lid can be maintained.

For example, a deepening can be formed as a trench going from near the center of a lid to near the edge of the lid. In this way, a plurality of trenches can be arranged on the lid, such that they extend radially and are conformally distributed on the lid. When the lid is welded to one or more current collectors through these conformally arranged deepenings, a balanced connection of the lid to the electrode stack can be achieved. Furthermore, an area for connecting the lid to a current collector can be increased/maximized, while on the same time stiffness and structural integrity of the lid can be maintained.

One or more deepenings, e.g. trenches, and one or more elevations, e.g. elongated bulges, may be arranged on top of each other. A deepening in one side of a lid may thus protrude as an elevation on the other side of the lid.

An embodiment of the first aspect is related to a battery cell,
wherein one or more elevations and/or one or more deepenings have a concentric dimension that is larger than their radial dimension.

For example, a deepening can be formed as a trench around a whole circumference of a lid. In one example, an elevation can also be formed as a bulge around a whole circumference of a lid. Such a trench and/or bulge can be formed circular, in particular for a circular lid configured for a connection to a cylindrical battery cell. In this case, also the electrode stack can be formed circular and a current collector on the side of the electrode stack may also be circular. Then the lid can be welded through the circular trench and the circular bulge to the cylindrical electrode stack, wherein the bulge is in contact with the electrode of the electrode stack.

In case, the battery cell has a different form, e.g. rectangular or prismatic, a deepening and/or an elevation can also be formed along a whole circumference of a rectangular lid. The connection of the lid to an electrode stack can be realized by welding the rectangular trench and bulge, wherein the bulge is in contact with the electrode of the electrode stack.

A circumferential trench can also be used to weld a lid to a can, in particular after the lid has been welded to an electrode stack. If the lid is made of metal, the electrode connected to the lid can then be electrically connected to the can as well. Furthermore, a lid welded to a may provide an effective sealing of the interface between the lid and the can.

A lid can comprise a plurality of concentrically arranged trenches and bulges. When the lid is welded to one or more current collectors through these conformally arranged concentrical deepenings and elevations, a balanced connection of the lid to the electrode stack can be achieved. Furthermore, a maximized area for connecting the lid to a current collector can be achieved, while on the same time stiffness and structural integrity of the lid can be maintained.

An embodiment of the first aspect is related to a battery cell,
wherein elevations and/or deepenings (102) are concentrically and/or radially shifted.

A lid can comprise triangular-shaped deepenings and/or elevations that are arranged with the same distance to the lid center on the lid area and are spaced, e.g., by an angle of 60 degrees from the middle of one deepening rsp. elevation to the middle of an adjacent deepening rsp. elevation. In this case, six deepenings and/or elevations can be arranged concentrically on the lid. Generally, the deepenings and elevations are arranged each as a pair wherein the elevation is aligned on one side of a lid directly above the deepening on the other side of the lid.

Additionally or alternatively, a lid can comprise circular deepenings and/or elevations that are arranged with an increasing distance to the lid center on a straight line that extends from the lid center to the edge of the lid. Further deepenings and/or elevations on a plurality of other lines that are spaced by a predefined angular distance relative to the lid center can be formed on a lid. This forms a pattern for a balanced connection of a lid to a current collector by a plurality of deepenings and elevations.

An embodiment of the first aspect is related to a battery cell,
wherein a lid is electrically connected to the can.

A lid can be connected to a can with the outer side of a concentric trench formed at the edge of a lid, as described above. Alternatively, a lid may be connected by one or more welding points on the edge of the lid. By connecting the lid electrically to the can the can and the lid will be on the same potential as the electrode that is connected to the lid. In this architecture, the can may be configured to provide a connection to the other electrode at bottom of the can. For example, the can may provide a pole connected to the other electrode in the center of the bottom side, wherein this part is electrically isolated (and sealed) from the rest of the can. Advantageously, electrical connections to both electrodes can then be taken from the bottom of the can. Additionally or alternatively, the can is configured to be closed at the bottom by a second lid. The second lid can also be configured such that both electrodes can be accessed by the second lid. For example, the second lid can be electrically connected to the can (and thereby connected to the electrode which is connected directly to the lid on the top of the can) and additionally provides in its center an isolated (and sealed) connection to the other electrode of the electrode stack. These architectures can provide a good connectivity and a low ohmic resistance.

Additionally or alternatively, a lid may be connected to a can by a non-permanent connection. In particular, this can be realized by connecting the inner side of a lid to the inner side of a can. Advantageously, a detachable connection between a lid and a can may be provided and on the same time the interface between the lid and the can may be sealed, e.g. by a seal comprised by the lid and/or a seal comprised by the can. This provides a battery cell with a detachable and sealed lid-can connection wherein the lid is electrically connected to the can and thereby the can is configured to form a part of an external electrical circuit.

An embodiment of the first aspect is related to a battery cell,
wherein a lid, in particular one or more elevations and/or one or more deepenings, and the can are made of aluminum; and
the lid is directly connected to the cathode.

An aluminum housing has a high conductivity and is in particular advantageous for contacting a lid is electrically to a can, e.g. in order to provide the potential of the cathode to the bottom of the cell.

Furthermore, aluminum is desirable as it is easy to process, in particular within a forming process like for example deep drawing, impact extrusion or in particular reverse extrusion. In an embodiment wherein a lid and the can may be one piece, the can and any deepenings and elevations in this lid, i.e. the bottom of the can, may be manufactured in one process step, e.g. deep drawing, impact extrusion or in particular reverse extrusion.

An embodiment of the first aspect is related to a battery cell,
wherein a lid, in particular one or more elevations and/or one or more deepenings, and the can are made of steel; and
the lid is directly connected to the anode.

A steel housing is robust and can be used for various types of applications.

An embodiment of the first aspect is related to a battery cell,
wherein a lid comprises one or more elevations connected to an anode current collector;
and one or more elevations connected to a cathode current collector;
and wherein the elevations connected to different electrodes are isolated from each other.

In one example, the current collectors of both electrodes cover a half circle each at the top of the electrode layer (which is adjacent to the top of the can) with an isolator between the two current collector areas. A corresponding lid comprises elevations over both current collector areas. Furthermore, the lid comprises an isolator that isolates the part of the lid that is connected to the collector to the part of the lid that is connected to the anode.

In another example, one current collector is provided as a concentrical ring and is welded to a corresponding concentrical elevation to the lid. The current collector of the other electrode can be welded such that it is connected to a center of the lid, which is isolated from the rest of the lid. This architecture has the advantage that a busbar, which may be connected to the electrodes in order to connect a plurality of battery cells needs little or no adjustment. The busbar can be formed as a "concentric fork" with the same radius and width as the concentric current collector. Then the busbar only needs to be arranged concentrically to the lid. No further adjustment of the position of the busbar is necessary to meet the concentric current collector. The other side of the busbar can be attached to the center of an adjacent battery's lid in order to connect to a current collector of the other electrode type.

An embodiment of the first aspect is related to a battery cell,
wherein:
- one or more elevations for one electrode type are electrically connected to the can; and
- one or more elevations for the other electrode type are electrically connected to a sealed contact in the lid, in particular in the center of the lid.

Such an arrangement may in particular be desirable in an embodiment where a lid and the can are one piece. Insofar, one or more elevations in one lid, i.e. the bottom of the can, may be connected to one electrode type and one or more elevations in the other lid, i.e. on the top of the can, may be connected to the other electrode type.

Forming a lid of aluminum facilitates a laser welding of the lid to one or more current collectors of an electrode stack.

A second aspect of the present disclosure is related to a method for manufacturing a battery cell,
comprising the steps:
- obtaining an electrode stack with a current collector of one electrode of the electrode stack at a top of the electrode stack and with a current collector of one electrode of the electrode stack at the bottom of the electrode stack;
- obtaining a lid configured to be arranged on a can with a bottom and a top configured to comprise the electrode stack, wherein a lid comprises one or more elevations and one or more deepenings;
- welding the elevations in the lid to the current collector on the top of the electrode stack;
- arranging the lid-current collector in the can;
- providing an electrolyte to the electrode stack.

Such a method may in particular be carried out to attain a battery cell according to one of the previous examples.

The lid can be connected to the electrode stack before the electrode stack is arranged in the can. In this way, a better control of the process (welding, crimping, screwing, etc.) to connect the lid to the electrode stack can be achieved. For example, a connection between the lid and the electrode stack can be analyzed visually or tested electrically, before being assembled with the can.

A lid may comprise one or more elevations and one or more deepenings through which it is directly connected to one or both current collectors of the electrode stack.

A can may comprise a closed bottom. Insofar, a lid is designed as the bottom of a can. In such an embodiment, a can and the elevations and deepenings in the lid may be manufactured in one process step, e.g. reverse extrusion.

As the current collector on the top of the electrode stack is welded to the elevations of the lid, one or more channels are formed through which the electrolyte can flow freely. Such a channel is formed because of the distance between the surface of the elevation and the surface of the side of the lid from which it protrudes. A deepening aligned with such an elevation ensures a simplified welding process.

An embodiment of the second aspect is related to a method for manufacturing a battery cell,
comprising the step:
- pressing the lid and the electrode stack together with a pre-defined force.

When welding a lid to a current collector, both elements should to be in direct contact to each other. Gaps between the current collector and the lid can deteriorate a welding result. In order to avoid any gaps between a lid and a current collector, the lid can be pressed with a pre-defined force to the current-collector and/or to the electrode stack.

After the connection of the lid to the electrode stack (via the current collectors), the electrode stack can be inserted into the can. Afterwards the lid can be pressed into or just positioned on the can. In a next step the lid is welded to the can. In a next step, the electrolyte can be provided to the electrode stack, in particular through a hole in the center of the lid, which can be closed by a plug or by welding afterwards. The sequence circumvents the need for welding the current collectors of an electrode stack that is already soaked in electrolyte.

An embodiment of the second aspect is related to a method for manufacturing a battery cell,
comprising the step:
- welding the bottom of the can to the current collector at the bottom of the electrode stack.

Such an arrangement may in particular be desirable in an embodiment where a lid and the can are one piece. Insofar, one or more elevations in one lid, i.e. the bottom of the can, may be connected to one electrode type and one or more elevations in the other lid, i.e. on the top of the can, may be connected to the other electrode type. The lid on the top of the can may be electrically sealed from the can.

By welding the bottom of the can to the current collector at the bottom of the electrode stack, the can may attain the same potential as said current collector. Furthermore, the complexity of the battery cell can be reduced and available space within the battery cell retained.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 schematically illustrates a battery cell in a cross-sectional view according to an embodiment of this disclosure.
Fig. 2 schematically illustrates a battery cell in a cross-sectional view according to a further embodiment of this disclosure.
Fig. 3a schematically illustrates a lid with elevations and deepenings according to an embodiment of this disclosure in a cross-sectional view.
Fig. 3b schematically illustrates the object of fig. 3a in a top view.
Fig. 4a schematically illustrates a lid with elevations and deepenings according to a further embodiment of this disclosure in a cross-sectional view.
Fig. 4b schematically illustrates the object of fig. 4a in a top view.
Fig. 5a schematically shows a section of a battery cell in a cross-sectional view according to a further embodiment of this disclosure.
Fig. 5b schematically illustrates a section the object of fig. 5a in a top view.

In the following description reference is made to the accompanying figures which form part of the disclosure and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

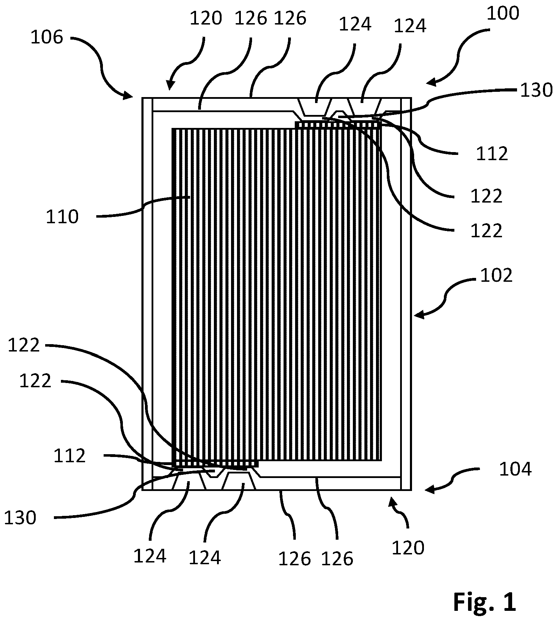

Fig. 1 schematically illustrates a battery cell 100 according to an embodiment of this disclosure. The battery cell 100 is designed as a cylindrical cell comprising an electrode stack 110 with two electrode layers, an anode layer, and a cathode layer. The electrode stack 110 may in particular be designed as a wound-up stack, e.g. a jelly-roll. Each electrode layer comprises a current collector 112.

The current collectors 112 can be thin, in particular only a few micrometers thin and may be angled, folded, or plated such that they form an area parallel, to the top and the bottom of the wound-up electrode stack 110.

The battery cell 100 furthermore comprises a can 102 with a bottom 104 and a top 106, that comprises the electrode stack 110. The can 102 is designed as a hollow cylinder or tube and open on both its ends, i.e. open on the bottom 104 and on the top 106. The can 102 may desirably be made of steel or in particular aluminum.

A lid 120 is arranged on the top 106 of the can 102 and an identical further lid 120 is arranged on the bottom 104 of the can 102. Each lid 120 comprises two elevations 122 and two deepenings 124. The lid 120 comprises two sides 126 connected by a circumferential side wall 128. The height of the circumferential side wall 128, i.e. the thickness of the lid 120, is low relative to the diameter of the lid 120.

The elevations 122 comprised in the lid 120 are designed into one side 126 of the lid 120 as elevated or raised areas or protrusions. Insofar, the surface of each elevation 122 protrudes from the level of the corresponding side 126 of the lid 120.

The deepenings 124 comprised in the lid 120 are designed into the side 126 of the lid 120 opposite to the side 126 that the elevations 122 are designed into. The deepenings 124 are designed as recessed areas or indentations. Insofar, the surface of each deepening 124 is recessed relative to the level of the corresponding side 126 of the lid 120.

The elevations 122 and the deepenings 124 are arranged on top of each other. The deepenings 124 in the one side 126 thus protrude as elevations 122 on the other side 126 of the lid 120. Insofar, a pair of deepening 124 and elevation 122 may be attained by a forming process such as e.g. punching, drawing, extrusion, or deep drawing of the lid 120. Desirably, all elevations 122 and all deepenings 124 are designed as such a pair.

The cross-section between the surface of an elevation 122 and a surface of a deepening 124 is thinner than the thickness of the lid 120.

Each lid 120 is directly connected to one current collector 112 of the electrode stack 110. In particular, the elevations 122 of each lid are directly connected to the respective current collector 112 of the electrode stack 110.

A pair of deepening 124 and elevation 122 can be used for a direct connection of the lid 120 to one or more current collectors 112 of the electrode stack 110. For example, a deepening 124 can be used for welding the corresponding elevation 122 of the lid 120 to the current collector 112, as the cross-section at the deepening 124 is very thin. As the cross-section of a lid 120 in a deepening 124 is thinner, a welding process needs less energy to weld through the lid 120 in order to directly connect the lid 120 to the current collector 112. A deepening 124 can further function as an optical and/or mechanical guide for a welding used for directly connecting the lid 120 to one or more current collectors 112.

As the elevations 122 are directly connected to the current collectors 112 of the electrode stack 110, channels 130 are created between each lid 120 and the electrode stack 110. These channels 130 allow a better flow of the electrolyte surrounding the electrode stack 110 in the can 102. The electrolyte is not illustrated in the figures. These channels 130 are formed because of the distance between the surface of the respective elevation 122 and the surface of the side 126 of the lid 120 from which the elevation 122 protrudes. A deepening 124 aligned with such an elevation ensures a simplified welding process.

When the electrode stack 110 is pressed onto the elevations 122 of the lid 120, an improved positioning and fixation of the electrode stack 110 on the lid 120 may be attained due to the friction between elevations 122 and electrode stack 110. Insofar, the elevations 122 may press into the soft electrode stack 110.

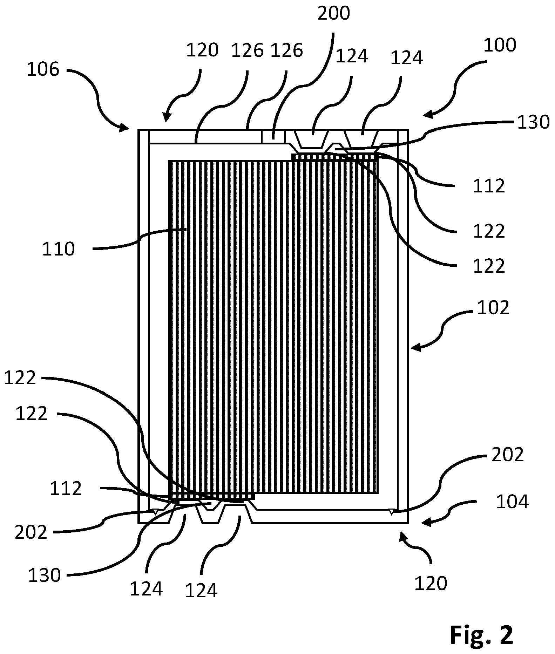

Fig. 2 schematically illustrates a battery cell 100 according to a further embodiment of this disclosure. The battery cell 100 illustrated in fig. 2 differs from that illustrated in fig. 1 insofar, that one lid 120 and the can 102 are one piece.

Insofar, the can 102 illustrated in fig. 2 is a cylindrical tube or a hollow cylinder with an open top 106 and a closed bottom 104. The bottom 104 thus forms the lid 120 arranged at the bottom of the electrode stack 110 and arranged at the bottom 104 of the can 102. Hence, the can 102 is a cylindrical tube open to one side only.

Furthermore, the bottom 104 comprises a circumferential bursting membrane 202. The bursting membrane 202 is arranged near the edges of the lid 120 and designed as a triangular groove. A bursting membrane 202 can be a safety device designed to rupture or burst under pre-defined conditions of the battery cell 100, e.g. if a pre-defined pressure is reached. Additionally or alternatively, a bursting membrane 202 can be configured to burst if a pre-defined temperature is reached.

Such an embodiment may be desirable as the complexity of the battery cell 100 is reduced. Furthermore, the manufacturing of such an embodiment is simplified as the bottom lid 120 does not need to be welded to the can 102. The can 102 and any deepenings 124 and elevations 122 in said lid 120, i.e. the bottom 104 of the can 102, may be manufactured in one process step, e.g. deep drawing, impact extrusion or in particular reverse extrusion.

The lid 120 on the top 106 of the can 102 comprises a hole 200 for providing an electrolyte to the electrode stack 110. The hole 200 is arranged in the center of the lid 120. This can in particular be advantageous for architectures in which the lid 120 is connected over the can 102 to the bottom of the battery cell 100, such that both poles can be provided from the bottom of the battery cell 100. Then the electrolyte can be provided with a maximal distance to the battery poles. After the electrolyte is provided, this hole 200 is finally sealed with a plug, which is not shown in fig. 2.

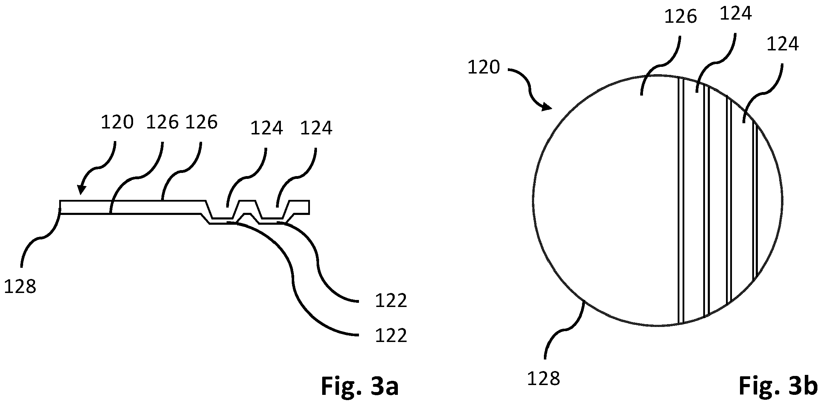

Fig. 3a schematically illustrates a lid 120 with elevations 122 and deepenings 124 according to an embodiment of this disclosure in a cross-sectional view. Fig. 3b schematically illustrates the object of fig. 3a in a top view.

The lid 120 shown in fig. 3a and fig. 3b is formed as a cap and is to be attached to a top 106 of the can 102 such that it seals the can 102 and may provide contact to at least on current collector 112 of the electrode stack 110. In many cases, in particularly in rechargeable lithium-ion cells, the cap includes several components such as a terminal, which is electrically connected to the internal cathode. A safety vent configured to release internal pressure in certain fault conditions. A sealing gasket to prevent the ingress of air and moisture and the egress of electrolyte.

The lid 120 comprises two deepenings 124 that are formed as trenches off center of the lid 120. The deepenings 124 are pressed structures (pressed, e.g. by a deep drawing press) that cause a certain stiffness of the lid 120. Thus, the lid comprises two elevation 122, aligned below the deepenings 124. Insofar, the elevations 122 are the result of the pressing or deep drawing of the deepenings 124. Furthermore, the cross section between the surface of an elevation 122 and a surface of a deepening 124 is thinner that the thickness of the lid 120.

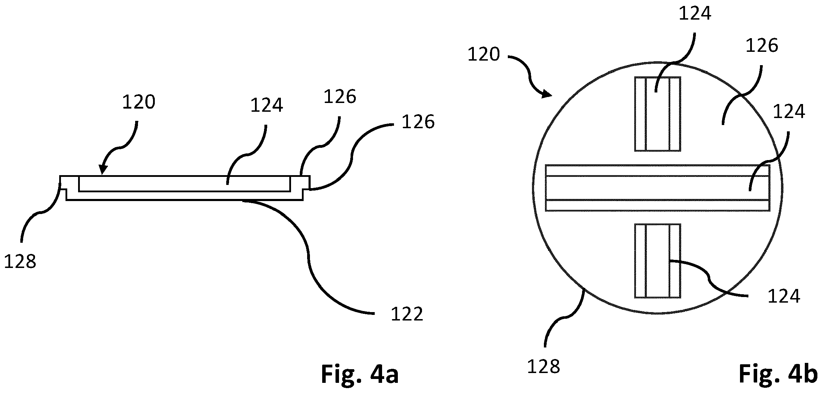

Fig. 4a schematically illustrates a lid 120 with elevations 122 and deepenings 124 according to a further embodiment of this disclosure in a cross-sectional view. Fig. 4b schematically illustrates the object of fig. 4a in a top view.

The lid 120 shown in fig. 4a and fig. 4b comprises three deepenings 124 that are formed as trenches. One deepening 124, i.e. one trench, covers almost the whole diameter of the lid 120 and goes through its center. The other two deepenings 124 are arranged perpendicular to the first deepening 124 and are thus also aligned with the center of the lid 120. The deepenings 124 are pressed structures (pressed, e.g. by a deep drawing press) that cause a certain stiffness of the lid 120. Thus, the lid 120 also comprises three elevations 122, aligned below the deepenings 124. However, as the sectional view cuts through the center deepening 124, only this deepening 124 and the corresponding elevation 122 can be seen in fig. 4a. Insofar, the elevations 122 are the result of the pressing or deep drawing of the deepenings 124. Furthermore, the cross section between the surface of an elevation 122 and a surface of a deepening 124 is thinner that the thickness of the lid 120.

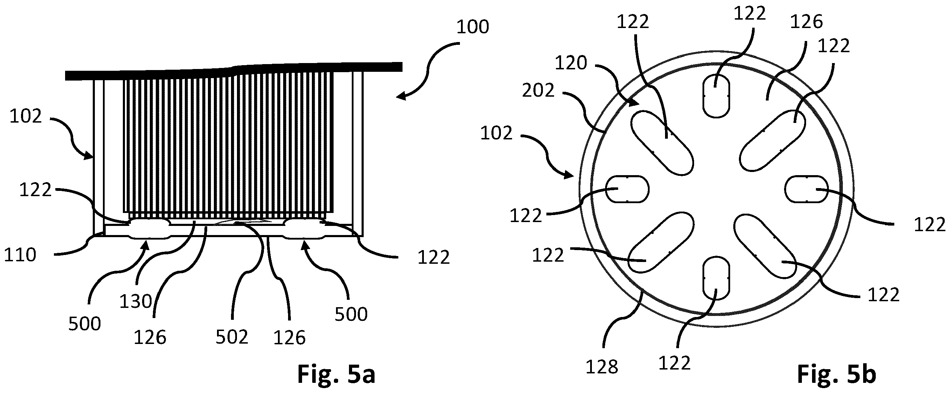

Fig. 5a schematically shows a section of a battery cell 100 in a cross-sectional view according to a further embodiment of this disclosure. The batter cell 100 comprises an electrode stack 110 with one elongated current collector 112. One elongated current collector 112 may also comprise multiple, e.g. bent or welded, current collectors 112. The electrode stack 110 is housed in a can 102 with a lid 120, wherein can 102 and lid 120 are not one piece but separate pieces. In fig. 5a, two elevations 122 are shown near the edges of the lid 120 on the upper side 126 of said lid 120.

The lid 120 is electrically connected to the electrode stack 110 by the elevations 122. The elevations 122 are welded to the current collector 112. The elevations 122 may for example have been welded to the current collector 112 by a laser welding process, wherein the laser introduced heat to the lower side 126 of the lid 120 below the elevation 122. The laser may have the welded the elevations 122 and the current collector 112 together and created a weld 500 below each elevation 122. In fig. 5a, two welds 500 are shown. As fig. 5a shows merely a cross-section of the lid 120, more welds may be comprised in the lid 120.

Channels 130 are created between the lid 120 and the electrode stack 110. These channels 130 allow a better flow of the electrolyte 502 surrounding the electrode stack 110 in the can 102. These channels 130 are formed because of the distance between the surface of the respective elevation 122 and the surface of the side 126 of the lid 120 from which the elevation 122 protrudes.

Fig. 5b schematically illustrates a section the object of fig. 5a in a top view. The lid 120 shown in fig. 5b comprises 8 elevation 122 that are aligned radially and shifted around the center of the lid 120. Each elevation 122 is shifted about 45 degrees from its neighboring elevation 122. The lid 120 comprises 4 shorter and four longer elevations 122, wherein each elevation has the shape of a rectangle with rounded edges, i.e. a rectangle that ends in a half circle on each of its short sides. Furthermore, a bursting membrane 202 is designed into the lid 120.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: battery cell
- 102: can
- 104: bottom
- 106: top
- 110: electrode stack
- 112: current collector
- 120: lid
- 122: elevation
- 124: deepenings
- 126: sides
- 128: side wall
- 130: channels
- 200: hole
- 202: bursting membrane
- 500: weld
- 502: electrolyte

## Claims

1. Battery cell (100),
comprising:
- an electrode stack (110) with two electrode layers, an anode layer and a cathode layer, wherein each electrode layer comprises a current collector (112) ;
- a can (102) with a bottom (104) and a top (106) that comprises the electrode stack (110);
- a lid (120) arranged on the top (106) of the can (102);
- a lid (120) arranged on the bottom (104) of the can (102);
wherein at least one lid (120) comprises one or more elevations (122) oriented towards the electrode stack (110) through which it is directly connected to one or both current collectors (112) of the electrode stack (110).

2. The battery cell (100) according to the preceding claim,
wherein a lid (120) and the can (102) are one piece.

3. The battery cell (100) according to one of the preceding claims,
wherein at least one lid (120) comprises one or more deepenings (124).

4. The battery cell (100) according to one of the preceding claims,
wherein at least one elevation (122) is a stepped elevation with at least two levels.

5. The battery cell (100) according to one of the preceding claims,
wherein one or more elevations (122) and/or one or more deepenings (124) have a radial dimension that is larger than their concentric dimension.

6. The battery cell (100) according to one of the preceding claims,
wherein one or more elevations (122) and/or one or more deepenings (124) have a concentric dimension that is larger than their radial dimension.

7. The battery cell (100) according to one of the preceding claims,
wherein elevations (122) and/or deepenings (124) are concentrically and/or radially shifted.

8. The battery cell (100) according to one of the preceding claims,
wherein a lid (120) is electrically connected to the can (102).

9. The battery cell (100) according to one of the preceding claims,
wherein a lid (120), in particular one or more elevations (122) and/or one or more deepenings (124), and the can (102) are made of aluminum; and
the lid (120) is directly connected to the cathode.

10. The battery cell (100) according to one of the preceding claims,
wherein a lid (120), in particular one or more elevations (122) and/or one or more deepenings (124), and the can (102) are made of steel; and
the lid (120) is directly connected to the anode.

11. The battery cell (100) according to one of the preceding claims,
wherein a lid (120) comprises one or more elevations (122) connected to an anode current collector (112);
and one or more elevations (122) connected to a cathode current collector (112); and
wherein the elevations (122) connected to different electrodes are isolated from each other.

12. The battery cell (100) according to the preceding claim,
wherein:
- one or more elevations (122) for one electrode type are electrically connected to the can (102); and
- one or more elevations (122) for the other electrode type are electrically connected to a sealed contact in the lid (120), in particular in the center of the lid (120).

13. Method for manufacturing a battery cell (100), in particular for manufacturing a battery cell (100) according to one of the claims 1 to 11 comprising the steps:
- obtaining an electrode stack (110) with a current collector (112) of one electrode of the electrode stack (110) at a top of the electrode stack (110) and with a current collector (112) of one electrode of the electrode stack (110) at the bottom of the electrode stack (110);
- obtaining a lid (120) configured to be arranged on a can (102) with a bottom (104) and a top (106) configured to comprise the electrode stack (110), wherein a lid (120) comprises one or more elevations (122) and one or more deepenings (124);
- welding the elevations (122) in the lid (120) to the current collector (112) on the top of the electrode stack (110);
- arranging the lid-current collector in the can (102);
- providing an electrolyte to the electrode stack (110).

14. The method according to the preceding claim,
comprising the step:
- pressing the lid (120) and the electrode stack (110) together with a pre-defined force.

15. The method according to one of the two preceding claims,
comprising the step:
- welding the bottom (104) of the can (102) to the current collector (112) at the bottom of the electrode stack (110).
